**Europäisches Patentamt**

**European Patent Office**

**Office européen des brevets**

(19)

(11) Veröffentlichungsnummer : **0 226 128 B2**

(12)

# NEUE EUROPÄISCHE PATENTSCHRIFT

(45) Veröffentlichungstag der neuen Patentschrift :
**11.05.94 Patentblatt 94/19**

(51) Int. Cl.$^5$ : **H02M 3/335**

(21) Anmeldenummer : **86116807.8**

(22) Anmeldetag : **03.12.86**

(54) **Elektronisches Schaltnetzteil.**

(30) Priorität : **20.12.85 DE 3545324**

(43) Veröffentlichungstag der Anmeldung :
**24.06.87 Patentblatt 87/26**

(45) Bekanntmachung des Hinweises auf die
Patenterteilung :
**17.05.89 Patentblatt 89/20**

(45) Bekanntmachung des Hinweises auf die
Entscheidung über den Einspruch :
**11.05.94 Patentblatt 94/19**

(84) Benannte Vertragsstaaten :
**AT CH DE FR GB LI NL**

(56) Entgegenhaltungen :
**EP-A- 0 030 026**
**EP-A- 0 056 593**
**EP-B- 57 910**
**DE-A- 3 218 594**
**DE-C- 2 457 664**
**US-A- 3 435 320**

(73) Patentinhaber : **Braun Aktiengesellschaft**
**Postfach 11 20**
**D-61466 Kronberg (DE)**

(72) Erfinder : **Schwarz, Gerhard**
**Eggestrasse 16**
**D-5990 Altena (DE)**

EP 0 226 128 B2

**Beschreibung**

Gegenstand der Erfindung ist ein elektronisches Schaltnetzteil zum Laden einer Batterie bzw. eines Akkumulators aus einer Wechsel- oder Gleichspannungsquelle unterschiedlicher Spannungshöhe mit einem primär getakteten Sperrwandler, bei dem die Primärwicklung eines Übertragers in Reihe zu einem ersten Transistor und dessen Sekundärwicklung in Reihe zur Batterie und einer ersten Diode geschaltet ist, wobei die Basis des ersten Transistors sowohl über die Reihenschaltung eines ersten Kondensators und eines ersten Widerstandes mit dem einen Wicklungsende der Sekundärwicklung des Übertragers, deren anderes Wicklungsende an die Batterie angeschlossen ist, als auch über einen zweiten Widerstand mit dem einen Pol der Eingangsspannungsquelle und mit dem Kollektor eines zweiten Transistors verbunden ist, dessen Emitter an Bezugspotential angeschlossen ist, wobei in Reihe zum ersten Transistor ein dritter Widerstand geschaltet ist und wobei der Emitter des ersten Transistors über eine Zenerdiode, angeschlossen an deren Kathode, an die Basis des zweiten Transistors angeschlossen ist, die über einen vierten Widerstand mit Bezugspotential verbunden ist.

Ein elektronisches Schaltnetzteil der genannten Art ist aus der DE-OS 32 18 594 bekannt, das zum Schnelladen und Erhaltungsladen einer Batterie, vorzugsweise einer Nickel-Cadmium-Batterie, dient, wobei das elektronische Schaltnetzteil grundsätzlich zur Konstantspannungs- und/oder Konstantstromversorgung elektrischer oder elektronischer Geräte vorgesehen und als primär getakteter Sperrwandler aufgebaut ist. Bei dem bekannten primär getakteten Sperrwandler ist die Primärwicklung eines Übertragers in Reihe zu einem Schalttransistor und die Sekundärwicklung des Übertragers in Reihe zu einem elektrischen Verbraucher in Form der Parallelschaltung einer Batterie und eines Elektromotors und einer Diode geschaltet. Darüber hinaus enthält das bekannte elektronische Schaltnetzteil einen Spannungskomparator, der aus zwei Transistoren einschließlich der zugehörigen Beschaltung besteht und den eingestellten Spannungssollwert am Verbraucher überwacht und bei Erreichen dieses Sollwertes den Schalttransistor des Sperrwandlers sperrt. Dadurch wird der bei entsprechend entladener Batterie fließende hohe Schnelladestrom bei Erreichen des am Spannungskomparator eingestellten Spannungswertes auf einen geringen Erhaltungsladestrom für die Batterie reduziert. Die Messung der Batteriespannung erfolgt dabei nicht während des hohen in die Batterie hineinfließenden Schnelladestromes, sondern lediglich bei geringer Belastung, wodurch die infolge des Innenwiderstandes der Batterie unvermeidlichen Messfehler vermieden bzw. verringert werden. Die für die Umschaltung vom Schnelladebetrieb auf den Erhaltungsladebetrieb erforderliche Spannungsreferenzschaltung erfordert jedoch einen genauen Abgleich, um nicht durch zu spätes Umschalten die Batterie zu gefährden. Andererseits ist jedoch ein sicheres Erreichen der Volladung der Batterie zur Erhöhung der Batterielebensdauer erforderlich. Der exakte Abgleich ist jedoch auch vom Alter der Batterie und der damit verbundenen Änderung der Ladecharakteristiken der Batterie abhängig, so daß theoretisch ein ständiges Nachjustieren erforderlich ist.

Aus der EP-A-0 030 026 ist eine Schaltungsanordnung zur geregelten Speisung eines Verbrauchers bekannt, die an verschiedenen Gleich- oder Wechselspannungen sowie an verschiedenen Wechselstromfrequenzen ohne Umschaltung betrieben werden kann. Diese bekannte Schaltungsanordnung weist einen Sperrwandler auf, der mittels zweier steuerbarer Halbleiterschalter abhängig von dem durch die Primärwicklung eines Übertragers fließenden Strom und abhängig von der zugeführten Eingangsspannung so gesteuert wird, daß die abgegebene Ausgangsleistung nahezu konstant ist. Als Verbraucher ist die Parallelschaltung einer Batterie mit einem Gleichstrommotor vorgesehen, so daß die Schaltungsanordnung beim Netzbetrieb entweder die volle Motorleistung oder bei ausgeschaltetem Motor einen Ladestrom für die Batterie liefert. Bei ausgeschaltetem Gleichstrommotor wird eine Schnelladung der Nickel-Cadmium-Batterie mit hohem Strom vorgenommen. Um eine Beschädigung der Batterie bei der Schnelladung zu vermeiden, ist bei dieser bekannten Schaltungsanordnung ein spannungsabhängiger Schalter vorgesehen, der aus einem Transistor besteht, dessen Kollektor über einen Widerstand mit der Basis des in Reihe zum Übertrager geschalteten Schalttransistors verbunden ist und dessen Basis-Emitter-Strecke in Reihe mit einem weiteren Widerstand und einer Zenerdiode parallel zur zu ladenden Batterie geschaltet ist. Übersteigt die Batteriespannung während des Schnelladevorganges den durch die Zenerdiode vorgegebenen Wert, so schaltet der Transistor durch und sperrt damit den in Reihe zur Primärwicklung des Übertragers geschalteten Schalttransistor. Der jeweilige Ein- und Ausschaltzeitpunkt des Sperrwandlers hängt von den durch zwei verschiedene Widerstände fließenden Strömen ab, so daß sich aus der Differenz dieser Ströme ein Hystereseverhalten ergibt. Auf diese Weise schaltet der Sperrwandler nicht ständig zwischen einem eingeschalteten und einem ausgeschaltetem Zustand hin und her, sondern macht es erforderlich, daß die Batteriespannung jeweils um einen gewissen Betrag abgesunken sein muß, bevor der Ladestrom erneut eingeschaltet wird. Mit dem Auschalten des Sperrwandlers erlöscht jeweils auch eine im Basiskreis des zweiten Transistors angeordnete Leuchtdiode und zeigt damit das Ende des Ladevorganges an.

Diese Schaltungsanordnung zum Schnelladen einer Batterie mittels eines primär getakteten Sperrwandlers weist aufgrund der erforderlichen Bereitschaftsspannung für die Steuer- und Regelelektronik einen verhältnismäßig geringen Wirkungsgrad auf und bedingt zudem bei gezogenem Netzstecker, d. h. bei reinem Batteriebetrieb, eine ständige Stromentnahme aus der Batterie zum Betrieb der Steuer- und Regelelektronik. Darüber hinaus ist der Aufwand an Bauelementen verhältnismäßig groß.

Aufgabe der vorliegenden Erfindung ist es, ein elektronisches Schaltnetzteil zum Laden einer Batterie aus einer Wechsel- oder Gleichspannungsquelle unterschiedlicher Spannungshöhe zu schaffen, das den Ladestrom praktisch verlustfrei ein- und ausschaltet und keine Energie verbraucht, wenn es nicht an die Versorgungsspannung angeschlossen ist.

Diese Aufgabe wird erfindungsgemäß dadurch gelöst, daß der Emitter des ersten Transistors über den dritten Widerstand mit Bezugspotential verbunden ist, daß parallel zur Sekundärwicklung des Übertragers die Reihenschaltung eines zweiten Kondensators und einer Gleichrichtereinrichtung vorgesehen ist, deren Verbindung an Bezugspotential angeschlossen ist, und daß parallel zum zweiten Kondensator eine Schalteinrichtung vorgesehen ist, die entweder den mit der Sekundärwicklung des Übertragers verbundenen Anschluß des zweiten Kondensators oder den mit Bezugspotential verbundenen Anschluß des zweiten Kondensators über eine Entkopplungseinrichtung mit der Basis des zweiten Transistors verbindet, wobei die Schalteinrichtung so ausgebildet ist, daß sie bei Erreichen des Volladezustandes der Batterie die Basis des zweiten Transistors über die Entkopplungseinrichtung mit dem mit der Sekundärwicklung verbundenen Anschluß verbindet und daß bei ausgeschaltetem Schaltnetzteil die Schalteinrichtung die Basis des zweiten Transistors über die Entkopplungseinrichtung mit Bezugspotential verbindet.

Die erfindungsgemäße Lösung stellt sicher, daß bei ausgeschaltetem Schaltnetzteil keine Energie verbraucht wird, da die Batterie von der Schalteinrichtung getrennt ist und diese deshalb nicht entladen werden kann. Weil die Schalteinrichtung bei ausgeschaltetem Schaltnetzteil die Entkopplungseinrichtung mit Bezugspotential verbindet, ist gewährleistet, daß nach dem Einschalten des Schaltnetzteils der Sperrwandler sofort kontinuierlich schwingt und ein großer Ladestrom fließt.

Eine vorteilhafte Ausgestaltung ist dadurch gekennzeichnet, daß die Schalteinrichtung aus einem Hilfsspannungskreis besteht, der von der Batteriespannung beaufschlagt ist.

Diese Ausgestaltung ermöglicht ein Erreichen der Volladung einer Batterie, beispielsweise einer Nickel-Cadmium-Batterie, mit konstantem Ladestrom unabhängig vom Alter der Batterie und Änderungen der Ladecharakteristiken der Batterie.

Eine nächste vorteilhafte Weiterbildung der Erfindung besteht darin, daß die Schalteinrichtung aus einem selbsthaltenden Thermoschalter besteht, der von der Zellentemperatur der Batterie beeinflußt ist.

Diese Weiterbildung bewerkstelligt ein sicheres Erreichen der Volladung der Batterie mit konstantem Ladestrom unabhängig vom Alter und von Änderungen der Ladecharakteristiken der Batterie, ohne daß äußere Einflüße, wie eventuell auftretende Spannungserhöhungen oder Spannungsspitzen, das Erreichen der Volladung beeinträchtigen. Außerdem wird ohne jeglichen Abgleich des Schaltnetzteils das Umschalten von einem hohen Schnelladestrom auf einen niedrigen Erhaltungsladestrom und umgekehrt sichergestellt.

Weitere vorteilhafte Ausgestaltungen sind den übrigen Unteransprüchen entnehmbar.

Anhand von in der Zeichnung dargestellten Ausführungsbeispielen soll der der Erfindung zugrundeliegende Gedanke näher erläutert werden. Es zeigen :

Fig. 1 ein Schaltbild eines elektronischen Schaltnetzteiles mit einer Steuer- und Regelelektronik zur Schnelladung einer Batterie mit automatischem Übergang auf eine Erhaltungsladung;

Fig. 2 eine Prinzipschaltung einer Schalteinrichtung gemäß Fig. 1 mit einer zellenspannungsabhängigen Umschaltung;

Fig. 3 eine Schaltung der Schalteiririchtung gemäß Fig. 1 mit zellentemperaturabhängiger Umschaltung und

Fig. 4 eine zeitliche Darstellung der Ladecharakteristiken einer Batterie und des Umschaltvorganges.

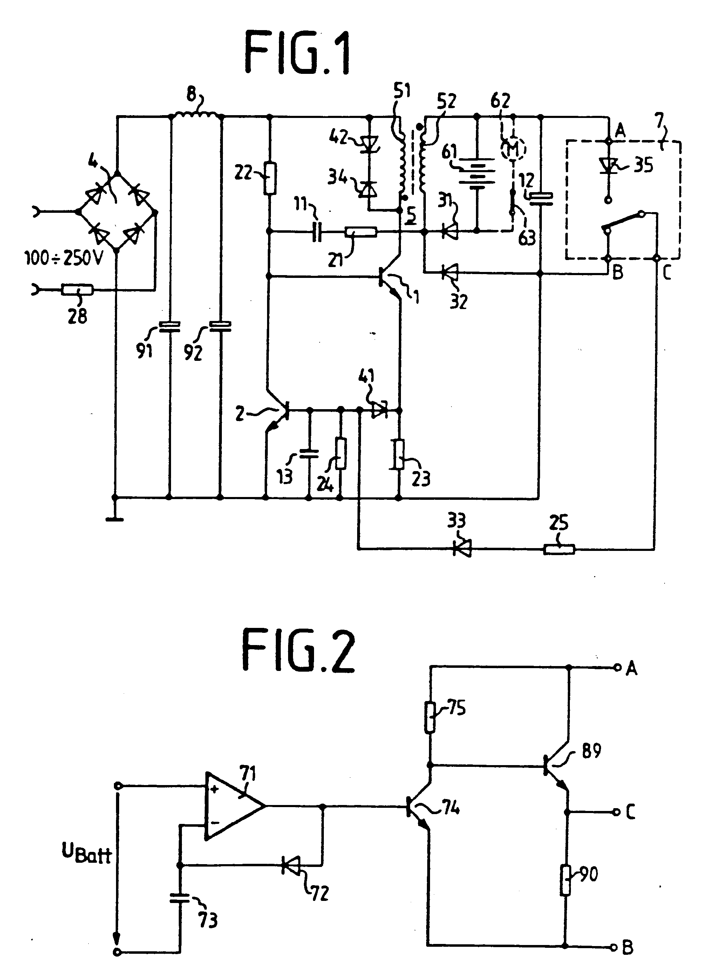

Das in Fig. 1 dargestellte elektronische Schaltnetzteil weist einen primär getakteten Sperrwandler mit einem Übertrager 5 und einem ersten Transistor 1 sowie einer im Lastkreis vorgesehenen ersten Diode 31 auf, die so gepolt ist, daß die in der Sperrzeit des ersten Transistors 1 im Übertrager 5 gespeicherte Energie in die Last 6, die aus einer Batterie 61 und aus einem über einen Schalter 63 an die Batterie 61 schaltbaren Gleichstrommotor 62 besteht, entladen wird. Der Sperrwandler wird über eine Gleichrichter-Brückenschaltung 4 und einen Widerstand 28 aus einem Gleich- oder Wechselspannungsnetz gespeits, dessen Spannung zwischen 100 und 250 Volt, im Extremfall aber auch 12 Volt, und dessen Frequenz im Falle eines speisenden Wechselspannungsnetzes nahezu beliebig sein kann, variieren kann. Die gleichgerichtete Ausgangsspannung wird über eine Sieb- und Glättungsschaltung, die aus einer Längsdrossel 8 und zwei Glättungskondensatoren 91, 92 besteht, an den Eingang des Sperrwandlers bzw. der Steuer- und Regelelektronik gelegt.

Parallel zu den Gleichspannungsklemmen ist die Reihenschaltung der Primärwicklung 51 des Übertragers 5 mit der Kollektor-Emitter-Strecke des ersten Transistors 1 geschaltet. Die Basis des ersten Transistors 1 ist sowohl über die Reihenschaltung eines ersten Kondensators 11 und eines ersten Widerstandes 21 mit dem einen Anschluß der Sekundärwicklung 52 des Übertragers 5 als auch über einen zweiten Widerstand 22 und die Längsdrossel 8 mit dem positiven Pol der Eingangsspannungsklemme verbunden. Darüber hinaus ist die Basis des ersten Transistors 1 über die Kollektor-Emitter-Strecke eines zweiten Transistors 2 mit Masse- oder Bezugspotential verbunden.

Der Emitter des ersten Transistors 1 ist an die Kathode einer ersten Zenerdiode 41 angeschlossen, deren Anode sowohl mit der Basis des zweiten Transistors 2 als auch über die Parallelschaltung eines vierten Widerstandes 24 und eines weiteren Kondensators 13 mit Masse- oder Bezugspotential verbunden ist. Darüber hinaus ist der Emitter des ersten Transistors 1 über einen dritten Widerstand 23 mit Masse- oder Bezugspotential verbunden.

Der Wickelsinn der Primär- und Sekundärwicklung 51 bzw. 52 des Übertragers 5 ist durch die eingetragenen Punkte bestimmt.

Parallel zur Sekundärwicklung 52 des Übertragers 5 ist sowohl die Reihenschaltung der Batterie 61 mit der ersten Diode 31 als auch die Reihenschaltung eines zweiten Kondensators 12 mit einer zweiten Diode 32, deren Verbindung an Masse- oder Bezugspotential gelegt ist, geschaltet.

Der zweite Kondensator 12 ist mit den Anschlußklemmen A und B einer Schalteinrichtung 7 verbunden, deren dritte Anschlußklemme C über die Reihenschaltung eines fünften Widerstandes 25 mit einer dritten Diode 33 an die Verbindung der Anode der Zenerdiode 41 mit der Basis des zweiten Transistors 2 angeschlossen ist, wobei die Kathode der dritten Diode 33 mit der Anode der Zenerdiode 41 verbunden ist. Die Schalteinrichtung 7 ist so beschaffen, daß die dritte Anschlußklemme C entweder mit der Anschlußklemme A oder mit der Anschlußklemme B verbunden wird, wobei hier die Anschlußklemme A über eine weitere Diode 35 mit der Anschlußklemme C verbindbar ist.

Nachstehend soll die Funktionsweise des elektronischen Schaltnetzteiles gemäß Fig. 1 näher erläutert werden.

Nach der Gleichrichtung der am Eingang der Gleichrichter-Brückenschaltung 4 anliegenden Gleich- oder Wechselspannung und nachfolgender Siebung bzw. Glättung mittels der Längsdrossel 8 bzw. der Querkondensatoren 91, 92 wird der als Schalttransistor arbeitende erste Transistor 1 über den zweiten Widerstand 22 mit einem geringen Basisstrom angesteuert, infolgedessen der erste Transistor 1 in den leitenden Zustand gesteuert wird. Über die Schaltstrecke des ersten Transistors 1 und die Primärwicklung 51 des Übertragers 5 entsteht ein Mitkopplungseffekt, durch den der erste Transistor 1 zusätzlich angesteuert und schlagartig in den vollständig leitenden Zustand geschaltet wird. Der Kollektorstrom steigt linear an und erzeugt am dritten Widerstand 23 eine dem jeweiligen Kollektorstrom proportionale Spannung. Beim Erreichen eines bestimmten Spitzenstromwertes des Kollektorstromes bzw. einer entsprechend proportionalen Spannung wird über die Zenerdiode 41 der zweite Transistor angesteuert, gelangt dadurch in den leitenden Zustand und verbindet die Basis des ersten Transistors 1 mit Masse- bzw. Bezugspotential und entzieht damit dem ersten Transistor 1 den Basisstrom, woraufhin der erste Transistor 1 sperrt.

Mit Beginn der Sperrphase des ersten Transistors 1 wechselt die Polarität der in der Sekundärwicklung 52 des Übertragers 5 induzierten Spannung. Die im Übertrager 5 gespeicherte Energie wird damit nach dem Prinzip des Sperrwandlers über die erste Diode 31 an die Batterie 61 abgegeben.

Während des Umschwingvorganges des Übertragers 5 begrenzen die parallel zur Primärwicklung 51 des Übertragers 5 geschaltete Reiheschaltung der Diode 34 mit der Zenerdiode 42 die Rückschaltspannungsspitze während der Sperrphase des ersten Transistors 1, wobei die Diode 34 und die Zenerdiode 42 entweder kathodenseitig oder anodenseitig zusammengeschaltet sind.

Im Leitzustand des ersten Transistors 1 wird der erste Kondensator 11 über den ersten Widerstand 21 aufgeladen und im Sperrzustand des ersten Transistors 1 so umgeladen, daß an seiner mit der Basis des ersten Transistors 1 verbundenen Elektrode eine positive Spannung ansteht, die auch bei sehr niedriger Betriebsspannung von z. B. 12 Volt ein sofortiges Wiedereinschalten des ersten Transistors 1 gewährleistet, wenn nach Beendigung der Übertrager-Entladephase der zweite Transistor 2 sperrt und somit der erste Transistor 1 in den Leitzustand gesteuert wird.

In der in Fig. 1 dargestellten Schaltverbindung der Schalteinrichtung 7, bei der die aus Diode 33 und Widerstand 25 bestehende Entkopplungseinrichtung mit Bezugspotential verbunden ist, erfolgt ein Schnelladen der Batterie 61, wobei der Batterieladestrom durch den Primärseitigen Spitzenstrom und die Induktivität des Übertragers bestimmt wird. Die Spannung am zweiten Kondensator 12 beträgt

$$U_{CSL} = U_{Batt} + U_{f31} - U_{f32}$$

wobei $U_{Batt}$ die Spannung an der Batterie 61, $U_{f31}$ der Durchlaßspannungsabfall der ersten Diode 31 und $U_{f32}$ der Durchlaßspannungsabfall der zweiten Diode 32 bedeutet. In dieser Schaltstellung der Schalteinrichtung 7 wird die Batterie 61 mit einem Schnelladestrom geladen.

In der entgegengesetzten Schaltstellung der Schalteinrichtung 7 erfolgt eine Ladung der Batterie 61 mit einem Erhaltungsladestrom, wobei die Spannung am zweiten Kondensator 12

$$U_{CEL} = U_{BET2} \frac{R_{24} + R_{25}}{R_{24}} + U_{f33} + U_{f35} \approx 2,6 \text{ Volt}$$

beträgt, wobei $U_{BET2}$ den Basis-Emitter-Spannungsabfall am zweiten Transistor, $R_{24}$ den Widerstandswert des vierten Widerstandes 24, $R_{25}$ den Widerstandswert des fünften Widerstandes 25, $U_{f33}$ den Spannungsabfall an der dritten Diode 33 und $U_{f35}$ den Durchlaßspannungsabfall an der fünften Diode 35 bedeutet.

Aufgrund der beiden oben stehenden Gleichungen fließt immer dann ein Ladestrom in die Batterie 61, wenn die Summe der Spannung am zweiten Kondensator 12 $U_{CEL}$ und $U_{f32}$ größer ist als die Summe der Spannung an der Batterie $U_{Batt}$ und dem Durchlaßspannungsabfall $U_{f31}$ an der ersten Diode 31. Damit ist während des Erhaltungsladezustandes der Ladestrom drastisch gegenüber dem Ladestrom im Schnelladezustand reduziert. In beiden Schaltstellungen der Schalteinrichtung 7 steht jedoch am zweiten Kondensator 12 eine Spannung zur Verfügung.

Während des Schwingvorganges des Sperrwandlers schaltet der erste Transistor 1 immer dann in den Leitzustand, wenn die Basisspannung des zweiten Transistors 2 unter einen bestimmten, durch die Zenerdiode 41 vorgegebenen Spannungswert abfällt, so daß während der Entladung des Übertragers 5 der zweite Transistor 2 sperrt und damit der erste Transistor 1 über den zweiten Widerstand 22 und mit Unterstützung der entsprechend umgepolten Ladung im ersten Kondensator 11 in den Leitzustand gesteuert wird.

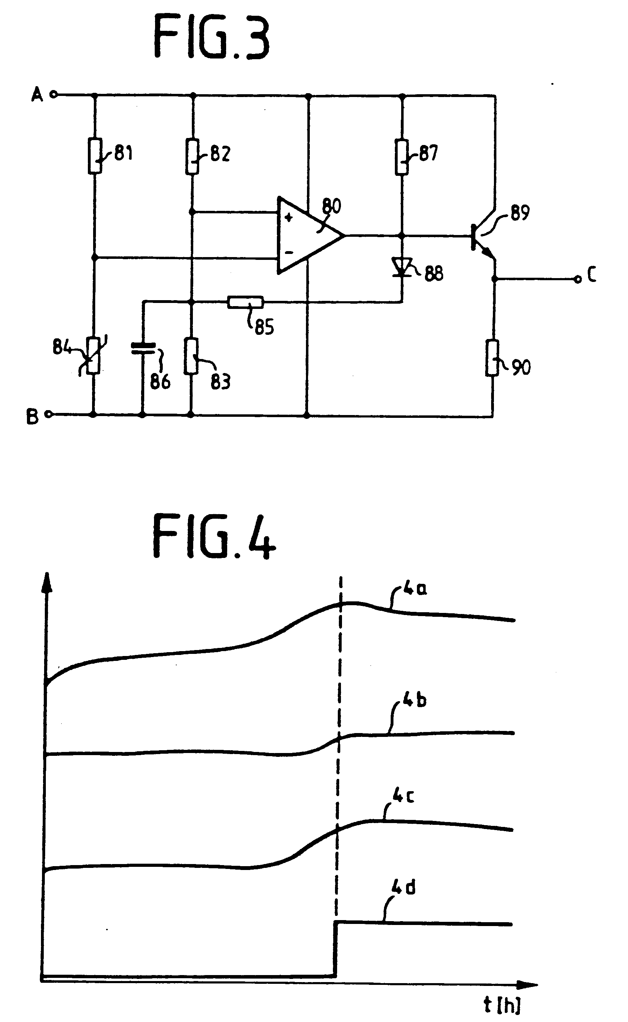

Anhand der Figuren 2 und 3 sollen verschiedene Ausführungsbeispiele der Schalteinrichtung 7 zur Berücksichtigung des jeweiligen Ladezustandes der Batterie 61 näher erläutert werden.

Das in Fig. 2 dargestellte Ausführungsbeispiel zeigt eine Schalteinrichtung, die die Zellenspannung der Batterie 61 erfaßt und bei einem bestimmten Zellenspannungswert umschaltet. Sie enthält einen Differenzverstärker 71, dessen positiver Eingang mit dem oberen Pol der Batterie 61 beaufschlagt ist, während der negative Eingang über einen dritten Kondensator 73 mit dem unteren Pol der Batterie 61 sowie über eine vierte Diode 72 mit seinem Ausgang verbunden ist, wobei die Anode der vierten Diode 72 an den Ausgang des Differenzverstärkers 71 angeschlossen ist.

Der Ausgang des Differenzverstärkers 71 ist mit der Basis eines dritten Transistors 74 verbunden, dessen Kollektor an die Basis eines vierten Transistors 89 geführt ist und über einen sechsten Widerstand 75 mit dem Kollektor des vierten Transistors 89 verbunden ist und die Anschlußklemme A gemäß Fig. 1 bildet. Der Emitter des Transistors 89, der die Anschlußklemme C gemäß Fig. 1 bildet, ist über einen Widerstand 90 mit Masse- oder Bezugspotential, das die Anschlußklemme B darstellt, verbunden.

In Verbindung mit der Darstellung gemäß Fig. 4 soll die Funktionsweise der Anordnung gemäß Fig. 2 erläutert werden.

Fig. 4 zeigt die Ladecharakteristiken beispielsweise einer Nickel-Cadmium-Batterie, die vorzugsweise mit konstantem oder nahezu konstantem Ladestrom geladen werden soll. Die Darstellung gemäß Fig. 4 zeigt die Zellenspannung (Kurve 4a), die Zellentemperatur (Kurve 4b) und den internen Gasdruck (Kurve 4c) einer Nickel-Cadmium-Batterie über der Ladezeit t. Dabei ist zu berücksichtigen, daß sowohl die Zellenspannung als auch die Zellentemperatur und der interne Gasdruck während des Ladevorganges in Abhängigkeit vom Ladestrom und der Umgebungstemperatur variieren können. Auch bei Alterung der Batterie können sich die Amplituden der Kurven 4a, 4b und 4c verändern, wobei jedoch die Kurvenform, d. h. vor allem das ausgeprägte Maximum, erhalten bleibt.

Wie der Darstellung gemäß Kurve 4a der Fig. 4 zu entnehmen ist, zeigt die Zellenspannung bei Erreichen der Volladung ein kurzes ausgeprägtes Maximum und fällt dann auf einen Wert ab, der höher ist als der Wert vor Erreichen der Volladung. Dieses ausgeprägte Maximum wird bei der Schaltungsanordnung gemäß Fig. 2 ausgenutzt, die im eigentlichen Sinne als Spitzenspannungsmesser anzusehen ist und gemäß Kurve 4d bei Erreichen des Maximums umkippt, da bei fallender Spannung am positiven Eingang des Komparators 71 die am aufgeladenen dritten Kondensator 73 anliegende Spannung überwiegt und somit den Komparatorausgang umschwingen läßt.

Das in Fig. 3 dargestellte Ausführungsbeispiel der Schalteinrichtung 7 zeigt einen den Verlauf der Zellentemperatur einer Batterie bei Erreichen des Volladezustandes ausnutzenden selbsthaltenden Thermoschalter.

Der selbsthaltende Thermoschalter gemäß Fig. 3 weist einen ersten parallel zum zweiten Kondensator 12 geschalteten Spannungsteiler, der aus einem ersten Spannungsteilerwiderstandes 81 und einem temperaturabhängigen Widerstand 84, der thermisch mit der Batterie 61 verbunden ist, besteht sowie einen zweiten, ebenfalls parallel zum zweiten Kondensator 12 geschalteten Spannungsteiler, der aus der Reihenschaltung eines zweiten Spannungsteilerwiderstandes 82 und eines dritten Spannungsteilerwiderstandes 83 besteht, auf. Der erste Spannungsteilerwiderstand ist an den negativen Eingang eines Komparators 80 angeschlossen, während der zweite Spannungsteiler an den positiven Eingang des Komparators 80 angeschlossen ist.

Der Ausgang des Komparators 80 ist über eine Diode 88 und einen Widerstand 85 mit dem positiven Eingang des Komparators 80 verbunden, wobei parallel zum dritten Spannungsteilerwiderstand 83 ein Kondensator 86 geschaltet ist. Darüber hinaus ist der Ausgang des Komparators 80 mit der Basis eines Transistors 89 verbunden, dessen Kollektor die Anschlußklemme A gemäß Fig. 1 bildet, während der Emitter die Anschlußklemme C gemäß Fig. 1 bildet. Über einen Widerstand 90 ist der Emitter des Transistors 89 mit Masse- oder Bezugspotential verbunden und formt damit die Anschlußklemme B gemäß Fig. 1. Parallel zur Basis-Kollektor-Strecke des Transistors 89 ist ein weiterer Widerstand 87 geschaltet.

Der in Fig. 3 dargestellte selbsthaltende Thermoschalter ist so ausgebildet, daß der Ausgang des Komparators auf einen hohen Spannungspegel bei Überschreiten einer vorgegebenen Zellentemperatur springt, wobei sichergestellt ist, daß ohne Abgleich eine geringe Toleranz der Schalttemperatur erreicht wird. Wird der Komparator 80 an Betriebsspannung gelegt, so ist die Spannung am nichtinvertierenden Eingang des Komparators 80 so lange gegenüber der des invertierenden Eingangs des Komparators niedriger bis der zweite Kondensator 12 aufgeladen ist. Damit kippt der Ausgang des Komparators in eine Stellung mit niedrigem Spannungspegel. Unter der Voraussetzung, daß der Widerstandswert des ersten Spannungsteilerwiderstandes 81 gleich dem des zweiten Spannungsteilerwiderstandes 82 ist, bleibt der Ausgang des Komparators 80 so lange auf niedrigem Spannungspegel wie der Widerstandswert des temperaturabhängigen Widerstandes 84 größer als der Widerstandswert des dritten Spannungsteilerwiderstandes 83 ist.

Wenn bei steigender Zellentemperatur der Batterie 61 der Widerstandswert des temperaturabhängigen (NTC-) Widerstandes 84 kleiner wird als der Widerstandswert des dritten Spannungsteilerwiderstandes 83 kippt der Komparatorausgang in eine Stellung mit hohem Spannungspegel, wodurch die Reihenschaltung des Widerstandes 85 mit der Diode 88 parallel zum zweiten Spannungsteilerwiderstandes 82 geschaltet wird und der Ausgang des Komparators 80 so lange auf hohem Spannungspegel bleibt wie der temperaturabhängige Widerstand 84 benötigt, um aufgrund der Abkühlung wieder hochohmiger zu werden. Dadurch ist sichergestellt, daß die in Kurve 4b der Fig. 4 dargestellte Zellentemperatur über der Ladezeit mit geringer Toleranz der Schalttemperatur und ohne Abgleich des elektronischen Schaltnetzteiles exakt berücksichtigt wird und zu einer entsprechenden Umschaltung des elektronischen Schaltnetzteiles beim Temperatursprung zum Zeitpunkt der Volladung führt.

Zusammenfassend gilt also für die Wirkungsweise der in Fig. 1, 2 und 3 gezeigten Schaltungsanordnungen, daß der Sperrwandler unbeeinflußt von der Ausgangsspannung bzw. dem Ausgangsstrom schwingt, wenn die Basis des Transistors 2 über die Entkopplungsdiode 33 an der Anschlußklemme B, das heißt an Bezugspotential liegt. Die am Kondensator 12 anliegende Spannung ist bei Vernachlässigung der Durchlaßspannungen der Dioden 31 und 32 gleich der Klemmenspannung des Akkumulators 61. Wenn die Basis des Transistors 2 über die Entkopplungsdiode 33 am positiven Pol des Kondensators 12 (Anschlußklemme A) liegt, wird der Transistor 2 leitend und damit der Sperrwandler außer Betrieb gesetzt. Die Spannung am Kondensator 12 und dazu proportional die Basisspannung des Transistors 2 sinkt damit dann entsprechend seiner Entladezeitkonstante ab. Wenn die Basisspannung den Wert unterschreitet, bei dem der Transistor 2 leitet, wird dieser gesperrt und der Sperrwandler beginnt wieder zu arbeiten. Die Spannung am Kondensator 12 steigt infolgedessen an bis der Transistor 2 wieder leitet und den Sperrwandler erneut außer Betrieb setzt.

Dieser Vorgang wiederholt sich laufend. Der arithmetische Mittelwert der Basisspannung des Transistors 2 ist gleich der Basis-Emitter-Spannung bei der dieser Transistor leitet (ca. 0,6 V). Der arithmetische Mittelwert der Spannung am Kondensator 12 ist der Basisspannung proportional. Da die Entladezeitkonstante des Kondensators 12 großt ist, sind zwischen den einzelnen Ladestromimpulsen dieses Kondensators entsprechend große Pausen, so daß der arithmetische Mittelwert dieses Stromes und des Ladestromes des Akkumulators 61 sehr klein ist. Das Puls-Pausen-Verhältnis des Akkumulatorladestromes ist also entsprechend dem des Kondensatorladestromes.

Da die Schalteinrichtung 7, die im allgemeinen ein elektronischer Schalter ist und eine Betriebsspannung benötigt, diese Betriebsspannung vom Kondensator 12 und nicht etwa von der Batterie 61 erhält, ist er nur in Funktion, wenn das Schaltnetzteil mit der Versorgungsspannung verbunden ist. Wird das Schaltnetzteil von der Versorgungsspannung getrennt, wird die Spannung am Kondensator 12 Null. Eine galvanische Verbindung zwischen Schalteinrichtung 7 und Akkumulator 61 besteht nicht, weshalb der Akkumulator auch nicht entladen werden kann.

Es wird also keine Energie durch die Schalteinrichtung 7 verbraucht, wenn das Schaltnetzteil nicht an die Versorgungsspannung angeschlossen ist und es erfolgt ein verlustloses Schalten des Ausgangsstroms des Sperrwandlers.

In analoger Weise sind auch andere Schalteinrichtungen 7, die die Ladecharakteristiken wie beispielsweise den in Kurve 4c der Fig. 4 dargestellten Verlauf des Zellendruckes einer Batterie berücksichtigen, herstellbar und für das in Fig. 1 dargestellte elektronische Schaltnetzteil verwendbar.

Die Schalteinrichtung 7 kann also so ausgestaltet werden, daß sie in Abhängigkeit von der Zellenspannung, der Zellentemperatur oder dem inneren Gasdruck der Batterie das Schaltnetzteil von einem hohen Schnelladestrom auf einen niedrigen Erhaltungsladestrom und umgekehrt umschaltet.

**Patentansprüche**

1. Elektronisches Schaltnetzteil zum Laden einer Batterie bzw. eines Akkumulators (61) aus einer Wechsel- oder Gleichspannungsquelle unterschiedlicher Spannungshöhe mit einem primär getakteten Sperrwandler, bei dem die Primärwicklung (51) eines Übertragers (5) in Reihe zu einem ersten Transistor (1) und dessen Sekundärwicklung (52) in Reihe zur Batterie (61) und einer ersten Diode (31) geschaltet ist, wobei die Basis des ersten Transistors (1) sowohl über die Reihenschaltung eines ersten Kondensators (11) und eines ersten Widerstandes (21) mit dem einen Wicklungsende der Sekundärwicklung (52) des Übertragers (5), deren anderes Wicklungsende an die Batterie (61) angeschlossen ist, als auch über einen zweiten Widerstand (22) mit dem einen Pol der Eingangsspannungsquelle und mit dem Kollektor eines zweiten Transistors (2) verbunden ist, dessen Emitter an Bezugspotential angeschlossen ist, wobei in Reihe zum ersten Transistor (1) ein dritter Widerstand (23) geschaltet ist und wobei der Emitter des ersten Transistors (1) über eine Zenerdiode (41), angeschlossen an deren Kathode, an die Basis des zweiten Transistors (2) angeschlossen ist, die über einen vierten Widerstand (24) mit Bezugspotential verbunden ist, dadurch gekennzeichnet, daß der Emitter des ersten Transistors (1) über den dritten Widerstand (23) mit Bezugspotential verbunden ist, daß parallel zur Sekundärwicklung (52) des Übertragers (5) die Reihenschaltung eines zweiten Kondensators (12) und einer Gleichrichtereinrichtung (32) vorgesehen ist, deren Verbindung an Bezugspotential angeschlossen ist, und daß parallel zum zweiten Kondensator (12) eine Schalteinrichtung (7) vorgesehen ist, die entweder den mit der Sekundärwicklung (52) des Übertragers verbundenen Anschluß (A) des zweiten Kondensators (12) oder den mit Bezugspotential verbundenen Anschluß (B) des zweiten Kondensators (12) über eine Entkopplungseinrichtung mit der Basis des zweiten Transistors (2) verbindet, wobei die Schalteinrichtung (7) so ausgebildet ist, daß sie bei Erreichen des Volladezustandes der Batterie (61) die Basis des zweiten Transistors (2) über die Entkopplungseinrichtung mit dem mit der Sekundärwicklung (52) verbundenen Anschluß (B) verbindet und daß bei ausgeschaltetem Schaltnetzteil die Schalteinrichtung (7) die Basis des zweiten Transistors (2) über die Entkopplungseinrichtung mit Bezugspotential verbindet.

2. Elektronisches Schaltnetzteil nach Anspruch 1, dadurch gekennzeichnet, daß die Entkopplungseinrichtung aus der Serienschaltung eines fünften Widerstandes (25) und einer dritten Diode (33) besteht.

3. Elektronisches Schaltnetzteil nach Anspruch 1 oder 2, dadurch gekennzeichnet, daß die Schalteinrichtung (7) aus einem Hilfsspannungskreis besteht, der von der Batteriespannung beaufschlagt ist.

4. Elektronisches Schaltnetzteil nach Anspruch 3, dadurch gekennzeichnet, daß die Schalteinrichtung (7) aus einem Komparator (71) besteht, dessen einer Eingang (+) mit dem einen Pol der Batterie (61) und dessen anderer Eingang (-) über einen dritten Kondensator (73) mit dem anderen Pol der Batterie (61) und über eine vierte Diode (72) mit seinem Ausgang verbunden ist, wobei der Ausgang des Komparators (71) über einen dritten Transistor (74) die Basis eines vierten Transistors (89) ansteuert, dessen Hauptstromstrecke parallel zum zweiten Kondensator (12) liegt.

5. Elektronisches Schaltnetzteil nach Anspruch 1 oder 2, dadurch gekennzeichnet, daß die Schalteinrichtung (7) aus einem selbsthaltenden Thermoschalter besteht, der von der Zellentemperatur der Batterie (61) beeinflußt ist.

6. Elektronisches Schaltnetzteil nach Anspruch 5, dadurch gekennzeichnet, daß der selbsthaltende Thermoschalter aus einem Komparator (80) besteht, dessen einer Eingang (+) von der am zweiten Kondensator (12) anliegenden Spannung und dessen anderer Eingang (-) von der an einem temperaturabhängigen Widerstand (84), der thermisch mit der Batterie (61) verbunden ist, abfallenden Spannung beeinflußt ist, und dessen Ausgang die Basis eines parallel zum zweiten Kondensator (12) liegenden vierten Transistor (89) ansteuert.

7. Elektronisches Schaltnetzteil nach Anspruch 6, dadurch gekennzeichnet, daß der selbsthaltende Thermoschalter zwei parallel zum zweiten Kondensator (12) geschaltete Spannungsteiler enthält, von denen der erste Spannungsteiler aus der Reihenschaltung eines ersten Spannungsteilerwiderstandes (81) und des temperaturabhängigen Widerstandes (84) zusammengesetzt ist, deren Verbindung an den negativen Eingang des Komparators (80) angeschlossen ist, und der zweite Spannungsteiler aus der Reihenschaltung eines zweiten Spannungsteilerwiderstandes (82) und eines dritten Spannungsteilerwiderstandes (83) besteht, deren Verbindung an den positiven Eingang des Komparators (80) angeschlossen ist, daß der Ausgang des Komparators (80) über eine Diode (88) und einen Widerstand (85) auf den positiven Eingang des Komparators (80) rückgekoppelt ist, daß parallel zum dritten Spannungsteilerwiderstand (83) ein Kondensator (86) geschaltet ist und daß der Ausgang des Komparators (80) mit der Basis des vierten Transistors (89) verbunden ist, dessen Kollektor mit dem mit der Sekundärwicklung (52) des Übertragers (5) verbundenen Anschluß des zweiten Kondensators (12) verbunden ist und dessen Emitter über einen Widerstand (90) an Bezugspotential gelegt ist und an die Entkopplungseinrichtung angeschlossen ist.

## Claims

1. An electronic switching power supply for charging a storage battery or an accumulator (61) from an ac or dc voltage source of different voltage levels, including a primary switched-mode blocking oscillator-type converter in which the primary coil (51) of a transformer (5) is connected in series with a first transistor (1) while its secondary coil (52) is connected in series with the storage battery (61) and a first diode (31), with the base of the first transistor (1) being connected, through a first capacitor (11) and a first resistor (21) connected in series, both to the one end of the secondary coil (52) of the transformer (5), while its other coil end is connected to the storage battery (61), and, through a second resistor (22), to the one terminal of the input voltage source and to the collector of a second transistor (2) having its emitter connected to reference potential, with a third resistor (23) being connected in series with the first transistor (1), and the emitter of the first transistor (1) being connected to the cathode of a zener diode (41) and further to the base of the second transistor (2), which base is connected to reference potential through a fourth resistor (24), characterized in that the emitter of the first transistor (1) is connected to reference potential through the third resistor (23), that the series arrangement comprised of a second capacitor (12) and a rectifier (32) is provided in parallel with the secondary coil (52) of the transformer (5), their junction being connected to reference potential, that a switching arrangement (7) is provided in parallel with the second capacitor (12), the switching arrangement connecting either the terminal (A) of the second capacitor (12) tied to the secondary coil (52) of the transformer or the terminal (B) of the second capacitor (12) tied to reference potential, to the base of the second transistor (2) through a decoupling arrangement, with the switching arrangement (7) being configured such that, when the storage battery (61) has reached its fully charged condition, it connects, through the decoupling arrangement, the base of the second transistor (2) to the terminal (B) connected to the secondary coil (52), and that, with the switching power supply turned off, the switching arrangement (7) connects the base of the second transistor (2) to reference potential through the decoupling arrangement.

2. An electronic switching power supply as claimed in claim 1, characterized in that the decoupling arrangement is comprised of a fifth resistor (25) and a third diode (33) connected in series.

3. An electronic switching power supply as claimed in claim 1 or claim 2, characterized in that the switching arrangement (7) is comprised of an auxiliary voltage circuit to which the battery voltage is applied.

4. An electronic switching power supply as claimed in claim 3, characterized in that the switching arrangement (7) is comprised of a comparator (71) having its positive input connected to the one terminal of the storage battery (61) and its negative input to the other terminal of the storage battery (61) through a third capacitor (73) as well as to its output through a fourth diode (72), with the output of the comparator (71) driving through a third transistor (74) the base of a fourth transistor (89) whose main circuit path runs parallel with the second capacitor (12).

5. An electronic switching power supply as claimed in claim 1 or claim 2, characterized in that the switching arrangement (7) is comprised of a self-holding thermal circuit breaker which is responsive to the cell temperature of the storage battery (61).

6. An electronic switching power supply as claimed in claim 5, characterized in that the self-holding thermal circuit breaker is comprised of a comparator (80) having acting on its positive input the voltage residing at the second capacitor (12) and having acting on its negative input the voltage drop across a thermally sensitive resistor (84) which is thermally connected to the storage battery (61), while its output drives the base of a fourth transistor (89) connected in parallel with the second capacitor (12).

7. An electronic switching power supply as claimed in claim 6, characterized in that the self-holding thermal circuit breaker includes two voltage dividers connected in parallel with the second capacitor (12), the first voltage divider thereof being comprised of a first voltage-dividing resistor (81) in series with the thermally sensitive resistor (84), whose junction is connected to the negative input of the comparator (80), and the second voltage divider thereof being comprised of a second voltage-dividing resistor (82) in series with a third voltage-dividing resistor (83), whose junction is connected to the positive input of the comparator (80), that the output of the comparator (80) is fed back to the positive input of the comparator (80) through a diode (88) and a resistor (85), that a capacitor (86) is connected in parallel with the third voltage-dividing resistor (83), and that the output of the comparator (80) is connected to the base of the fourth transistor (89) whose collector is connected to the terminal of the second capacitor (12) tied to the secondary coil (52) of the transformer (5) and whose emitter is connected to reference potential through a resistor (90) and to the decoupling arrangement.

## Revendications

1. Bloc d'alimentation électronique pour charger une batterie ou un accumulateur (61) depuis une source à tension alternative ou continue ayant une valeur de tension différente, comportant un convertisseur à oscillateur bloqué, attaqué par des impulsions, côté primaire, dans lequel l'enroulement primaire (51) d'un transformateur (5) est branché en série avec un premier transistor (1) et l'enroulement secondaire (52) est branché en série avec la batterie (61) et d'une première diode (31), la base du premier transistor (1) étant d'une part reliée, par 1' intermédiaire du groupement série d'un premier condensateur (11) et d'une première résistance (21), à la première extrémité de l'enroulement secondaire (52) du transformateur (5) dont l'autre extrémité est reliée à la batterie (61) et, d'autre part, reliée par l'intermédiaire d'une deuxième résistance (22) au pôle de la source de tension d'entrée et au collecteur d'un deuxième transistor (2) dont l'émetteur est raccordé au potentiel de référence, une troisième résistance (23) étant branchée en série avec le premier transistor (1), l'émetteur du premier transistor (1) étant raccordé, par l'intermédiaire d'une diode zener (41), relié à sa cathode, à la base du deuxième transistor (2), laquelle est reliée au potentiel de référence par l'intermédiaire d'une quatrième résistance (24), caractérisé par le fait que l'émetteur du premier transistor (1) est relié au potentiel de référence par l'intermédiare d'une troisième résistance (23), par le fait qu'il est prévu, en parallèle de l'enroulement secondaire (52) du transformateur (5), un groupement série d'un deuxième condensateur (12) et d'un dispositif redresseur (32) qui ont leur liaison mutuelle raccordée au potentiel de référence, et par le fait qu'il est prévu, en parallèle du deuxième condensateur (12), un dispositif de commutation (7) qui, par l'intermédiaire d'un dispositif de découplage, relie à la base du deuxième transistor (2) soit la borne (A) du deuxième condensateur (12) reliée à l'enroulement secondaire (52) du transformateur, soit la borne (B) du deuxième condensateur (12) reliée au potentiel de référence, le dispositif de commutation (7) étant tel qu'il relie, par l'intermédiaire du dispositif de découplage, la base du deuxième transistor (2) à la borne (B), reliée à l'enroulement secondaire (52), lorsque la batterie (61) atteint son état de charge complète et que le dispositif du commutation (7) relie la base du deuxième transistor (2) au potentiel de référence, par l'intermédiaire du dispositif de découplage, lorsque le bloc d'alimentation est mis hors circuit.

2. Bloc d'alimentation électronique selon revendication 1, caractérisé par le fait que le dispositif de découplage est constitué par le groupement série d'une cinquième résistance (25) et d'une troisième diode (33).

3. Bloc d'alimentation électronique selon revendication 1 ou 2, caractérisé par le fait que le dispositif de commutation (7) est constitué par un circuit à tension auxiliaire, qui est sollicité par la tension de batterie.

4. Bloc d'alimentation électronique selon revendication 3, caractérisé par le fait que le dispositif de commutation (7) est constitué par un comparateur (71) dont une première entrée (+) est reliée au premier pôle de la batterie (61) et dont l'autre entrée (-) est reliée, par l'intermédiaire d'un troisième condensateur (73), à l'autre pôle de la batterie (61) et, par l'intermédiaire d'une quatrième diode (72), à sa sortie, la sortie du comparateur (71) attaquant, par l'intermédiaire d'un troisième transistor (74), la base d'un quatrième transistor (89) dont le trajet de courant principal est en parallèle du deuxième condensateur (12).

5. Bloc d'alimentaion électronique selon revendication 1 ou 2, caractérisé par le fait que le dispositif de commutation (7) est consituté par un thermocommutateur à auto-entretien qui est influencé par la température de cellule de la batterie (61).

6. Bloc d'alimentation électronique selon revendication 5, caractérisé par le fait que le thermocommutateur à auto-entretien est constitué par un comparateur (80) dont une première entrée (+) est influencée par la tension appliquée au deuxième condensateur (12) et dont l'autre entrée (-) est influencée par la chute de tension apparaissant à une résistance (84) variant avec la température, cette résistance étant en liaison thermique avec la batterie (61), et la sortie du comparateur attaquant la base d'un quatrième transistor (89) disposé en parallèle du deuxième condensateur (12).

7. Bloc d'alimentation électronique selon revendication 6, caractérisé par le fait que le thermocommutateur à auto-entretien comporte deux diviseurs de tension raccordés en parallèle au deuxième condensateur (12), le premier diviseur de tension étant constitué par le groupement série d'une première résistance de division de tension (81) et de la résistance dépendant de la température (84), la liaison entre elles étant raccordée à l'entrée négative du comparateur (80), et le deuxième diviseur de tension étant constitué par le groupement série d'une deuxième résistance de division de tension (82) et d'une troisième résistance de division de tension (83), la liaison entre ces dernières résistances étant raccordée à l'entrée positive du comparateur (80), par le fait que la sortie du comparateur (80) est rétrocouplée à l'entrée positive du comparateur (80) par l'intermédiaire d'une diode (88) et d'une résistance (85), par le fait qu'un condensateur (86) est relié en parallèle à la troisième résistance de division de tension (83), et par le fait que la sortie du comparateur (80) est reliée à la base du quatrième transistor (89) dont le collecteur est relié à la borne du deuxième condensateur (12) reliée à l'enroulement secondaire (52) du transformateur (5), et dont l'émetteur est appliqué, par l'intermédiaire d'une résistance (90), au potentiel de référence et est raccordé au dispositif de découplage.

# FIG.1

# FIG.2

# FIG.3

# FIG.4